# EUROPEAN PATENT SPECIFICATION

(11) **EP 2 640 105 B1**
(45) Date of publication and mention of the grant of the patent: **28.10.2015**
(21) Application number: 11840335.1
(22) Date of filing: 02.03.2011
(51) Int. Cl.: H04W 12/06, H04L 29/06, H04M 1/67, H04W 12/08, H04W 8/24

(54) **METHOD, DEVICE AND SYSTEM FOR UNLOCKING MOBILE TERMINAL BY OPERATOR**
VERFAHREN, VORRICHTUNG UND SYSTEM ZUM ENTSPERREN EINES MOBILES ENDGERÄTS DURCH EINEN BETREIBER
PROCÉDÉ, DISPOSITIF ET SYSTÈME POUR DÉVERROUILLER UN TERMINAL MOBILE PAR UN OPÉRATEUR

(30) Priority: 12.11.2010 CN 201010542901
(43) Date of publication of application: 18.09.2013
(73) Proprietor: ZTE Corporation, Shenzhen, Guangdong 518057 (CN)
(72) Inventor: XI, Chunyan, Shenzhen Guangdong 518057 (CN); HAN, Chunyuan, Shenzhen Guangdong 518057 (CN); LI, Xuejun, Shenzhen Guangdong 518057 (CN)
(74) Representative: Conti, Marco
(86) International application number: PCT/CN2011/071456
(87) International publication number: WO 2012/062067

(56) References cited:
- CN-A- 1 533 207
- CN-A- 101 026 834
- CN-A- 101 494 854
- CN-A- 101 494 854
- US-A1- 2008 113 687
- US-A1- 2010 178 898

## Description

### Field of the Invention

The present invention relates to the communication field, and in particular to a method, a device and a system for unlocking a mobile terminal by an operator.

### Background of the Invention

In recent years, with the rapid development of mobile phone technologies, operators have raised higher requirements for customized services. When customizing a mobile terminal product, an operator may usually raise system locking requirements, such as network locking/card locking/terminal locking etc, wherein definitions of the network locking/the card locking/the terminal locking are described as follows.

Terminal locking (also known as machine locking) is a special requirement for a terminal. After a mobile terminal completes an operation of locking to a specific card, it is required that the terminal can use the specific card only and other cards cannot be used on the terminal normally.

Card locking is a special requirement for a card. After the card is locked, it is required that the card can be only used on a certain terminal and cannot be used on other terminals.

Network locking is a special requirement for a network. After the network is locked, it is required that only a specific network can be used, e.g. only the network of China-Mobile can be used and the network of China Unicom or the network of China Telecommunications cannot be used.

By doing so, the operator may be able to solve problems of secret change of a network by a user, unauthorized distribution of goods and loss of customers etc., so that the operator may ensure that a consumer, who bought a phone at a discount, is able to satisfy terms of an agreement between the operator and the consumer. The terms may include that the consumer can buy the phone and services thereof at a very low price as long as the consumer uses specified reservation within a relatively long period of time. At the same time, other problems are also solved, e.g. when a mobile terminal of a user is lost, if the mobile terminal is provided with a machine locking function, it can be ensured that the lost mobile terminal cannot be used by another person through changing another Subscriber Identity Module (SIM)/Universal SIM (USIM) card, only if the user reports the loss of the SIM/USIM card in the mobile terminal or reports the SIM/USIM card in the mobile terminal as unserviceable to a service office.

Corresponding to the locking functions above, manufacturers also need to provide methods for removing the lock, e.g. a request for removing the lock may be raised when the agreement ends or after certain traffic is used by the user.

When manufacturing a phone, a manufacturer will generate information of specific cryptographic key list according to a specific service customized by an operator. An unlocking process of a user is a process of obtaining a cryptographic key, which usually includes that: after receiving an unlocking request from the user, the operator obtains an unlocking cryptographic key from the manufacturer, the manufacturer sends a cryptographic key list to the operator, and after verifying authority of the user, the operator sends unlocking information to the user.

During the unlocking process above, the cryptographic key list is owned by the manufacturer, thus a process of transmitting the cryptographic key between the manufacturer and the operator is added to the unlocking process between the user and the operator. In order to protect interests of the operator, communication safety needs to be ensured between the manufacturer and the operator. Each manufacturer may supply goods to all operators and each operator may also raise supply customization requirements for each manufacturer. Therefore, communication between the manufacturer and the operator is unsafe, thus resulting in relatively poor safety of unlocking by the mobile terminal under the control of the operator.

US 2008113687, US2010178898 and CN 101494854 provide respective technical solutions, however, the above mentioned problems still remains unsolved.

### Summary of the Invention

The present invention is to provide a method, a device and a system for unlocking a mobile terminal by an operator, to at least solve the poor safety problem above that the mobile terminal removes the lock under the control of the operator. Object of the present invention is to overcome the deficiencies of the prior art set out above. Said object is achieved by the method for unlocking a mobile terminal by an operator according to the appended claims.

According to an aspect of the present invention, a method for unlocking a mobile terminal by an operator is provided, including: an operator device receiving an unlocking request from the mobile terminal, wherein the unlocking request carries unlocking identification information; the operator device determining to allow the mobile terminal to unlock according to the unlocking identification information, and according to the unlocking identification information, querying a cryptographic key list database pre-stored in the operator device to obtain an unlocking cryptographic key; and the operator device sending the unlocking cryptographic key to the mobile terminal to ensure that the mobile terminal carries out the unlocking according to the unlocking cryptographic key.

Preferably, the operator device receives the unlocking request from the mobile terminal through one of the following modes: a mode of a short message, a mode of Unstructured Supplementary Service Data (USSD) or a mode of Wireless Application Protocol (WAP).

Preferably, the unlocking identification information includes: a network control password of the mobile terminal and identification information of the mobile terminal; and the operator device determining to allow the mobile terminal to unlock according to the unlocking identification information includes: the operator device detecting whether the network control password of the mobile terminal and the identification information of the mobile terminal are legal, and if both of the network control password of the mobile terminal and the identification information of the mobile terminal are legal, determining whether or not a current state of the mobile terminal allows unlocking, and if yes, determining to allow the mobile terminal to unlock.

Preferably, determining whether or not the current state of the mobile terminal allows unlocking includes one of the following modes: determining whether or not service time of the mobile terminal satisfies a specified time; determining whether or not network traffic used by the mobile terminal satisfies a specified traffic value; and determining whether or not an amount of consumption of the mobile terminal satisfies a specified amount value.

Preferably, the unlocking identification information further includes a locking mode which is one of the followings: a network locking mode, a card locking mode, a terminal locking mode and a cell locking mode; and according to the unlocking identification information, querying the cryptographic key list database pre-stored in the operator device to obtain the unlocking cryptographic key includes: the operator device, according to the identification information of the mobile terminal and the locking mode, querying the cryptographic key list database pre-stored in the operator device to obtain the unlocking cryptographic key.

Preferably, when determining not to allow the mobile terminal to unlock according to the unlocking identification information, the operator device sends an unlocking authorization failure message to the mobile terminal, where in the unlocking authorization failure message carries a reason of the unlocking failure.

Preferably, after the operator device sends the unlocking cryptographic key to the mobile terminal, the method further comprises: after determining that the mobile terminal is unlocked, the operator device monitoring a use state of the mobile terminal, and locking the mobile terminal over again after the use state satisfies a set locking condition.

According to another aspect of the present invention, an operator device is provided, including: a receiving module, configured to receive an unlocking request from a mobile terminal, wherein the unlocking request carries unlocking identification information; an indexing module, configured to determine to allow the mobile terminal to unlock according to the unlocking identification information, and according to the unlocking identification information, query a cryptographic key list database pre-stored in the operator device to obtain an unlocking cryptographic key; and a sending module, configured to send the unlocking cryptographic key to the mobile terminal to ensure that the mobile terminal carries out the unlocking according to the unlocking cryptographic key.

According to still another aspect of the present invention, a system for unlocking a mobile terminal by an operator is provided, including a mobile terminal and an operator device; In the above, the mobile terminal includes: a request sending module, configured to send an unlocking request to the operator device, wherein the unlocking request carries unlocking identification information; a cryptographic key receiving module, configured to receive an unlocking cryptographic key returned by the operator device; and an unlocking processing module, configured to carry out unlocking according to the unlocking cryptographic key; and the operator device includes: a request receiving module, configured to receive the unlocking request from the mobile terminal; an indexing module, configured to determine to allow the mobile terminal to unlock according to the unlocking identification information, and according to the unlocking identification information, query a cryptographic key list database pre-stored in the operator device to obtain the unlocking cryptographic key; and a cryptographic key sending module, configured to send the unlocking cryptographic key to the mobile terminal.

Preferably, the operator device communicates with the mobile terminal through one of the following modes: a mode of a short message, a mode of Unstructured Supplementary Service Data (USSD) or a mode of Wireless Application Protocol (WAP).

From the technical solution provided in the present invention, an operator device uses a cryptographic key list database pre-stored in the operator device to obtain an unlocking cryptographic key of a mobile terminal and provides the unlocking cryptographic key to the mobile terminal to control the unlocking of the mobile terminal. The process is not interfered by participation of a manufacturer, thus the poor safety problem that the mobile terminal removes the lock under the control of the operator is solved, meanwhile, the unlocking process is simplified, the speed of responding to an unlocking request of the mobile terminal is quickened, and the satisfaction of using the mobile terminal by a user is improved.

### Brief Description of the Drawings

Drawings, provided for further understanding of the present invention and forming a part of the specification, are used to explain the present invention together with embodiments of the present invention rather than to limit the present invention, wherein:
Fig. 1 is a flow diagram of a method for unlocking a mobile terminal by an operator according to the first embodiment of the present invention;
Fig. 2 is a networking construction schematic diagram of a mobile terminal and an operator according to the first embodiment of the present invention;
Fig. 3 is a flow diagram of a method for unlocking a mobile terminal by an operator according to the second embodiment of the present invention;
Fig. 4 is a diagram of information exchange among a user, a mobile terminal and an operator cryptographic key server according to the second embodiment of the present invention;
Fig. 5 is a structural diagram of an operator device according to the third embodiment of the present invention; and
Fig. 6 is a structural diagram of a system for unlocking a mobile terminal by an operator according to the fourth embodiment of the present invention.

### Detailed Description of the Embodiments

In order to make the technical solution and advantages of the present invention clearer, the embodiments of the present invention will be further described in details below in combination with the accompanying drawings.

According to the embodiments of the present invention, when removing the lock of a mobile terminal, a user sends a request to an operator directly. After querying a cryptographic key list database stored in the operator, the operator determines whether or not the user is authorized to remove the lock. If the user is authorized to remove the lock, an unlocking cryptographic key is sent to the mobile terminal. The cryptographic key list database is provided together with the mobile terminal to the operator by a manufacturer. During the whole process, the operator maintains a cryptographic key list and an authority, thus protecting interests of the operator to the utmost extent and greatly improving the safety. On this basis, a method, a device and a system for unlocking a mobile terminal by an operator are provided by the embodiments of the present invention.

### Embodiment 1

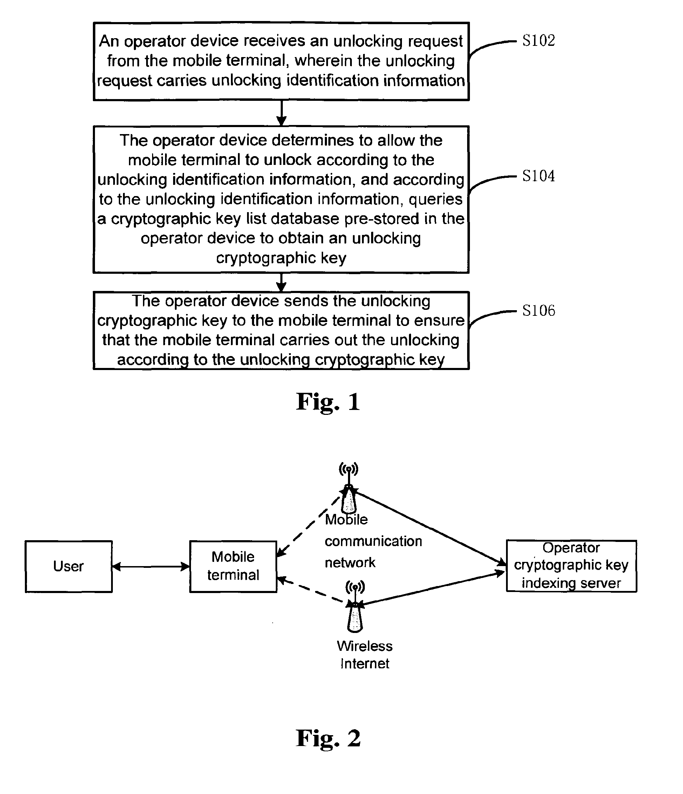

The present embodiment provides a method for unlocking a mobile terminal by an operator. As shown in Fig. 1, the method includes the following steps:
Step S102: an operator device receives an unlocking request from the mobile terminal, wherein the unlocking request carries unlocking identification information;

In the above, the operator device receives the unlocking request from the mobile terminal through one of the following modes: a mode of a short message, a mode of USSD or a mode of WAP.

Step S104: the operator device determines to allow the mobile terminal to unlock according to the unlocking identification information, and according to the unlocking identification information, queries a cryptographic key list database pre-stored in the operator device to obtain an unlocking cryptographic key.

The cryptographic key list database pre-stored in the operator device may be obtained by the following mode: a manufacturer provides cryptographic key list information corresponding to a locking mode of the mobile terminal to the operator while providing the mobile terminal to the operator; the operator, according to the cryptographic key list information provided by the manufacturer and a user authority, generates its own cryptographic key list database according to a certain principle.

The unlocking identification information above may include: a network control password of the mobile terminal and identification information of the mobile terminal; on this basis, the operator device determines to allow the mobile terminal to unlock according to the unlocking identification information in Step S104 may include: the operator device detects whether the network control password of the mobile terminal and the identification information of the mobile terminal are legal, and if both the network control password of the mobile terminal and the identification information of the mobile terminal are legal, determines whether or not a current state of the mobile terminal allows unlocking, and if yes, determines to allow the mobile terminal to unlock.

Determining whether or not the current state of the mobile terminal allows unlocking includes one of the following modes: determining whether or not service time of the mobile terminal satisfies a specified time; determining whether or not network traffic used by the mobile terminal satisfies a specified traffic value; and determining whether or not an amount of consumption of the mobile terminal satisfies a specified amount value.

Preferably, the unlocking identification information above may further include a locking mode which is one of the followings: a network locking mode, a card locking mode, a terminal locking mode and a cell locking mode;

In the above, definitions of the network locking, the card locking and the terminal locking are the same as those in traditional technology and a cell locking means that the mobile terminal can be only used in a specified cell.

Preferably, according to the unlocking identification information, querying the cryptographic key list database pre-stored in the operator device to obtain the unlocking cryptographic key includes: the operator device, according to the identification information of the mobile terminal and the locking mode, queries the cryptographic key list database pre-stored in the operator device to obtain the unlocking cryptographic key.

Step S106: the operator device sends the unlocking cryptographic key to the mobile terminal to ensure that the mobile terminal carries out the unlocking according to the unlocking cryptographic key.

When determining not to allow the mobile terminal to unlock according to the unlocking identification information, the operator device sends an unlocking authorization failure message to the mobile terminal and the unlocking authorization failure message carries a reason of the unlocking failure.

After the operator device sends the unlocking cryptographic key to the mobile terminal, the method may further include: after determining that the mobile terminal is unlocked, the operator device monitors a use state of the mobile terminal, and locks the mobile terminal over again after the use state satisfies a set locking condition.

In order to prevent a user from using a previously-obtained cryptographic key after the relocking, a restriction condition may be added to the unlocking processing flow, e.g. the unlocking cryptographic key may be changed according to successful unlocking times, at the same time, after the mobile terminal is unlocked successfully, a verification message is sent to the operator automatically to notify the operator device to carry out corresponding updating. Of course, completion of the process needs to be supported by a safe and reliable communication system.

The unlocking of the present embodiment may be applied to various locking modes, e.g. a network locking mode, a card locking mode, a terminal locking mode and a cell locking mode etc. Described by taking the networking construction schematic diagram of a mobile terminal and an operator in Fig. 2 for example, wherein, the mobile terminal may be connected to an operator device by a mobile communication network or the wireless Internet. The operator device in the present embodiment may specifically refer to an operator cryptographic key indexing server. The user in the present embodiment may send an unlocking request to the operator cryptographic key indexing server directly. The operator cryptographic key indexing server queries its own cryptographic key list database and sends the final unlocking authorization information to the user of the mobile terminal through a certain mode. During the whole unlocking process, the manufacturer does not need to provide services, does not need to communicate with the operator of the user, and does not need to send the unlocking cryptographic key to the operator of the user.

The operator device of the present embodiment obtains the unlocking cryptographic key of the mobile terminal by using the cryptographic key list database pre-stored in the operator device and provides the unlocking cryptographic key to the mobile terminal to control the unlocking of the mobile terminal. The process is not interfered by participation of the manufacturer, thus the relatively poor safety problem that the mobile terminal removes the lock under the control of the operator is solved, meanwhile, the unlocking process is simplified, the speed of responding to the unlocking request of the mobile terminal is quickened, and the satisfaction of using the mobile terminal by the user is improved.

### Embodiment 2

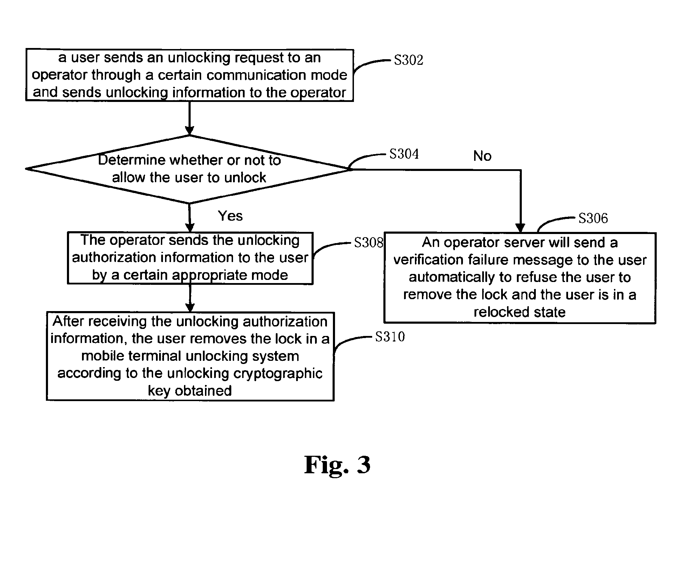

The present embodiment provides a method for unlocking a mobile terminal by an operator. As shown in Fig. 3, the method for unlocking a mobile terminal by an operator includes the following steps:
Step S302: a user sends an unlocking request to an operator through a certain communication mode and sends unlocking information to the operator;

In the above, the unlocking information is some specific identification information which is able to meet requirements of cryptographic key query required by a given locking mode. For example, for a card locking mode, the unlocking information may include: an International Mobile Equipment Identity (IMEI) of a user phone (also refered to as a user terminal), a network control password and an unlocking request.

The communication mode between the user phone and the operator may be any appropriate mode as long as locking requirements are satisfied, e.g. a mode of a short message may be applied a mode of USSD or a mode of WAP may be performed.

Step S304: the operator detects a user state, queries a cryptographic key list database and determines whether or not to allow the user to unlock; if the user is not allowed to unlock, Step S306 is performed. Otherwise, Step S308 is performed;

In the above, the operator determines whether or not the user state is authorized to remove the lock according to the unlocking request information sent by the user, and if the user state is authorized to remove the lock, queries the cryptographic key list database of the user according to the unlocking information to obtain an unlocking cryptographic key, and then generates the final unlocking authorization information according to the unlocking cryptographic key.

In the above, the cryptographic key list database is provided by a manufacturer who provides products. When the operator purchases the products of the manufacturer, the manufacturer needs to provide cryptographic key list information corresponding to locking modes of the products together. In this way, a cryptographic key list is maintained by the operator, thus protecting interests of the operator to the utmost extent.

Taking an unlocking mode corresponding to card locking for example, an operator detects whether or not an IMEI and a network control password carried in unlocking information sent by a user are legal and whether or not a current state of a mobile terminal allows to remove the lock, and according to the IMEI and the network control password, queries a cryptographic key list database of the operator to finally determine the unlocking authorization information of the user.

The mode for determining a user authority may be any mode determined by the operator, e.g. whether the deadline of a purchase agreement about a user terminal is reached, the network traffic used by the user reaches a value specified by the operator, and an amount of consumption of the user reaches a value specified by the operator etc.

Step S306: if the operator indexes that the user's information of the unlocking request fails to satisfy requirements, an operator server will send a verification failure message to the user automatically to refuse the user to remove the lock and the user is in a relocked state.

Step S308: if the operator indexes that the unlocking request of the user satisfies the requirements, the operator sends the unlocking authorization information to the user by a certain appropriate mode. The unlocking authorization information may include information such as an unlocking cryptographic key and a user identifier etc.

The communication mode between the operator and the mobile terminal may send the unlocking authorization information by any appropriate mode, e.g. a mode of a short message may be applied, and a mode of USSD or a mode of WAP is performed.

Step S310: after receiving the unlocking authorization information, the user removes the lock in a mobile terminal unlocking system according to the unlocking cryptographic key obtained.

In order to reduce message receiving failures of the user caused by the network or other reasons, or dissatisfaction of the user caused by other phenomena, the present embodiment further puts forward that the operator sends confirmation information to the user. The confirmation information includes a summary of the performed operations, e.g. a reason of refusing to remove the lock and unlocking identifier waiting.

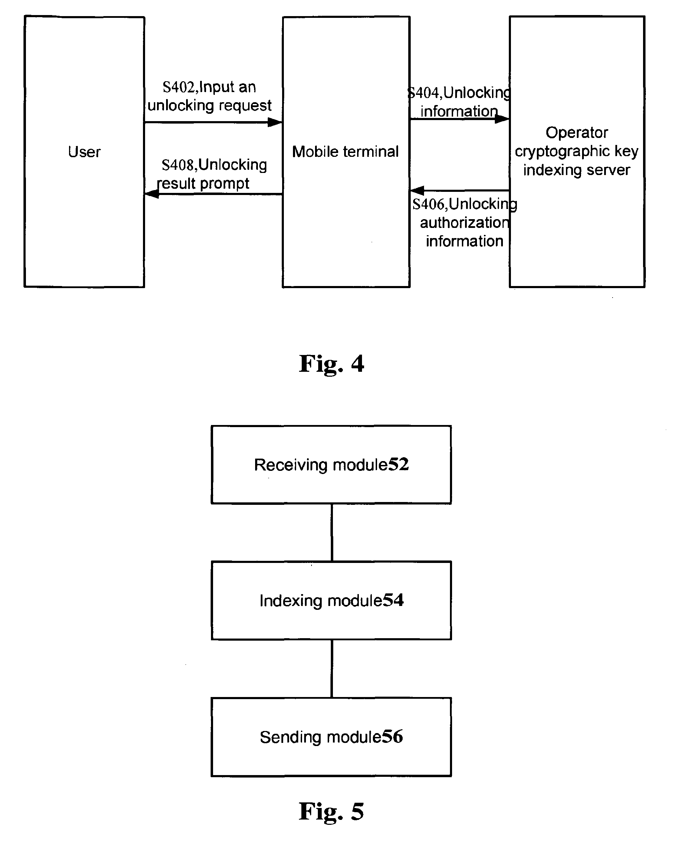

Referring to the diagram of information exchange among a user, a mobile terminal and an operator cryptographic key server in Fig. 4, the information exchange among the entities and the role which each entity plays are illustrated clearly by the figure. A user, a mobile terminal and an operator cryptographic key server are included in the figure and an information exchange process of the three is described as follows.

Step S402: the user inputs a command of an unlocking request on the mobile terminal.

Step S404: after receiving the unlocking request from the user, the mobile terminal packages the unlocking request and an identifier for indexing an unlocking cryptographic key to be unlocking information and sends the unlocking information to the operator cryptographic key server by a certain mode which may be identified by any operator cryptographic key server, e.g. the unlocking information may be sent to the operator cryptographic key server by a mobile communication network (USSD, a short message etc.) or the wireless Internet [WAP, Wireless Fidelity (WiFi) etc.].

Step S406: after receiving the information of the unlocking request, the operator cryptographic key server performs user state judgment and cryptographic key query. If the operator agrees to remove the lock of the mobile terminal, a cryptographic key needed by the mobile terminal and related information will be packaged to be an unlocking authorization success message. Otherwise, an unlocking authorization failure message will be packaged, and then the operator sends unlocking authorization information to the mobile terminal by a mode which can be identified by the mobile terminal. Similarly, the unlocking authorization information may be sent to the mobile terminal by a mobile communication network (USSD, a text message etc.) or the wireless Internet (WAP, WiFi etc.) etc..

Step S408: after receiving the unlocking authorization information, the mobile terminal will extract the unlocking cryptographic key according to the unlocking authorization information. If the unlocking cryptographic key is extracted, the lock will be removed by an unlocking processing module. After successful removing the lock, the successful unlocking will be prompted to the user. Otherwise, an unsuccessful unlocking will be prompted to the user.

The operator device of the present embodiment uses the cryptographic key list database pre-stored in the operator device to obtain the unlocking cryptographic key of the mobile terminal and provides the unlocking cryptographic key to the mobile terminal to control the mobile terminal to remove the lock. The process is not interfered by participation of the manufacturer, thus the relatively poor safety problem that the mobile terminal remove the lock under the control of the operator is solved, meanwhile, the process of removing the lock is simplified, the speed of responding to the unlocking request of the mobile terminal is quickened, and the satisfaction of using the mobile terminal by the user is improved.

### Embodiment 3

The present embodiment provides an operator device. As shown in Fig. 5, the operator device includes:
a receiving module 52, configured to receive an unlocking request from a mobile terminal, wherein the unlocking request carries unlocking identification information;
the operator device receives the unlocking request from the mobile terminal through one of the following modes: a mode of a short message, a mode of USSD or a mode of WAP;
an indexing module 54, connected with the receiving module 52 and configured to determine to allow the mobile terminal to unlock according to the unlocking identification information, and according to the unlocking identification information, query a cryptographic key list database pre-stored in the operator device to obtain an unlocking cryptographic key; and
a sending module 56, connected with the indexing module 54 and configured to send the unlocking cryptographic key to the mobile terminal to ensure that the mobile terminal carries out the unlocking according to the unlocking cryptographic key.

The unlocking identification information includes: a network control password of the mobile terminal and identification information of the mobile terminal; determining to allow the mobile terminal to unlock according to the unlocking identification information by the indexing module 54 includes: detecting whether the network control password of the mobile terminal and the identification information of the mobile terminal are legal, and if both of the network control password of the mobile terminal and the identification information of the mobile terminal are legal, determine whether or not a current state of the mobile terminal allows unlocking, and if yes, determining to allow the mobile terminal to unlock, wherein determining whether or not the current state of the mobile terminal allows unlocking includes one of the following modes: determining whether or not service time of the mobile terminal satisfies a specified time; determining whether or not network traffic used by the mobile terminal satisfies a specified traffic value; and determining whether or not an amount of consumption of the mobile terminal satisfies a specified amount value.

The unlocking identification information may further include a locking mode which is one of the followings: a mode of network locking, a mode of card locking, a mode of terminal locking and a mode of cell locking; according to the unlocking identification information, querying the cryptographic key list database pre-stored in the operator device by the indexing module 54 to obtain the unlocking cryptographic key includes: the indexing module 54, according to the identification information of the mobile terminal and the locking mode, queries the cryptographic key list database pre-stored in the operator device to obtain the unlocking cryptographic key.

When determining not to allow the mobile terminal to unlock according to the unlocking identification information, the operator device of the present embodiment sends an unlocking authorization failure message to the mobile terminal and the unlocking authorization failure message carries a reason of the unlocking failure.

Preferably, after sending the unlocking cryptographic key to the mobile terminal, the operator device determines that the mobile terminal is unlocked, monitors a use state of the mobile terminal, and locks the mobile terminal over again after the use state satisfies a set locking condition.

An internal processing flow of the operator device is described as below:
1) A receiving module is responsible for receiving unlocking information from a mobile terminal, analyzing and organizing the unlocking information and delivering the unlocking information to an indexing module. If the unlocking is performed for a locked card, the unlocking information needs to include a unique identifier which can be restricted to a certain card; similarly, if the unlocking is performed for a terminal locking mode, the unlocking information needs to include a unique identifier which can be restricted to a certain terminal;
2) The indexing module is responsible for verifying the state of a user according to the unlocking information delivered by the receiving module and detecting whether or not the user is authorized to unlock; if the user is authorized to unlock, unlocking cryptographic key need to be queried according to the unique identifier for unlocking. These cryptographic keys are related to devices for identifying corresponding phones in a database, e.g. a serial number of a phone may be used as unique characteristic information. If the mode is a mode of a card lock, the unlocking cryptographic key may be an IMEI;
3) A sending module is responsible for packaging the cryptographic key indexed by the indexing module or packaging an unlocking prohibiting message to be unlocking authorization information and sending the unlocking authorization information to the mobile terminal to remove the lock.

The operator device of the present embodiment uses the cryptographic key list database pre-stored in the operator device to obtain the unlocking cryptographic key of the mobile terminal and provides the unlocking cryptographic key to the mobile terminal to control the unlocking of the mobile terminal. The process is not interfered by participation of the manufacturer, thus the problem of relatively poor safety of unlocking by the mobile terminal under the control of the operator is solved, meanwhile, the unlocking process is simplified, the speed of responding to an unlocking request of the mobile terminal is quickened, and the satisfaction of using the mobile terminal by the user is improved.

### Embodiment 4

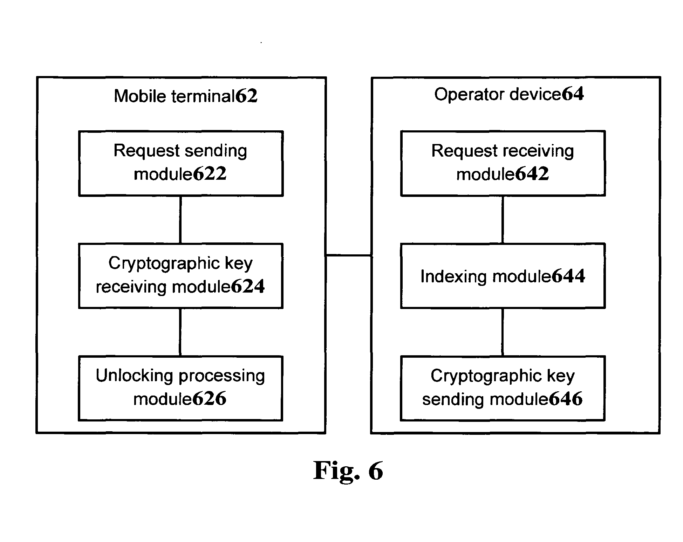

The present embodiment provides a system for unlocking a mobile terminal by an operator. As shown in Fig. 6, the system includes: a mobile terminal 62 and an operator device 64; the mobile terminal 62 includes:
a request sending module 622, configured to send an unlocking request to the operator device 64, wherein the unlocking request carries unlocking identification information; the unlocking identification information may include: a network control password of the mobile terminal 62 and identification information of the mobile terminal 62;
a cryptographic key receiving module 624, configured to receive an unlocking cryptographic key returned by the operator device 64;
an unlocking processing module 626, configured to perform unlocking according to the unlocking cryptographic key;
the operator device 64 includes:
   a request receiving module 642, configured to receive the unlocking request from the mobile terminal 62;
   an indexing module 644, configured to determine to allow the mobile terminal 62 to unlock according to the unlocking identification information, and according to the unlocking identification information, query a cryptographic key list database pre-stored in the operator device 64 to obtain the locking cryptographic key;
   a cryptographic key sending module 646, configured to send the unlocking cryptographic key to the mobile terminal 62.

The operator device 64 communicates with the mobile terminal 62 through one of the following modes: a mode of a short message, a mode of USSD or a mode of WAP.

An internal processing of the mobile terminal is described as below:
1) A request sending module 622 is responsible for processing an unlocking request of a user, packaging the unlocking request and specific information used to obtain the unlocking cryptographic key, and sending them through a mode which allow the unlocking request and the specific information to be received by any operator server, e.g. the unlocking request and the specific information may be sent to an operator device by a mobile communication network (USSD, a short message etc.) or the wireless Internet (WAP, WiFi etc.) etc..
2) A cryptographic key receiving module 624 is responsible for receiving unlocking authorization information sent by the operator device 64, e.g. an unlocking cryptographic key, and performing judgment and identification for unlocking information, and if the unlocking information is an unlocking authorization failure message, locking the mobile terminal over again and sending an information prompt of an unlocking failure to the user, and otherwise, extracting the unlocking cryptographic key and delivering the cryptographic key to an unlocking processing module 626.
3) the unlocking processing module 626 is responsible for unlocking the mobile terminal. If a card is locked, the unlocking processing module 626 is configured to remove special requirements for the card. After removing the lock, the card is not restricted to be used on a certain mobile terminal and may be used on other mobile terminals.

If the phone is locked, the unlocking processing module 626 is configured to remove special requirements for a mobile phone or a fixed station. After the mobile terminal is unlocked, the mobile phone or the fixed station is not restricted to use a certain specific card and other cards can be used on the mobile phone and the fixed station normally.

An internal processing flow of the operator device may be realized by the description in the fourth embodiment, which will not be repeated here.

In order to prevent a user from using a previously-obtained cryptographic key after the relocking, a restriction condition may be added to the unlocking processing flow, e.g. the unlocking cryptographic key may be changed according to successful unlocking times, at the same time, after the mobile terminal is unlocked successfully, a verification message is sent to the operator automatically to notify the operator device to perform corresponding updating. Of course, completion of the process needs to be supported by a safe and reliable communication system.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the present invention are all included in the scope of the protection of the present invention.

## Claims

1. A method for unlocking a mobile terminal by an operator, **characterized by** comprising:
an operator device receiving an unlocking request from the mobile terminal, wherein the unlocking request carries unlocking identification information;
the operator device determining to allow the mobile terminal to unlock according to the unlocking identification information, and querying, according to the unlocking identification information, a cryptographic key list database pre-stored in the operator device to obtain an unlocking cryptographic key; and
the operator device sending the unlocking cryptographic key to the mobile terminal to ensure that the mobile terminal carries out the unlocking according to the unlocking cryptographic key;
the unlocking identification information comprises: a network control password of the mobile terminal and identification information of the mobile terminal: and the operator device determining to allow the mobile terminal to unlock according to the unlocking identification information comprises: the operator device detecting whether the network control password of the mobile terminal and the identification information of the mobile terminal are legal, if both of the network control password of the mobile terminal and the identification information of the mobile terminal are legal, determining whether or not a current state of the mobile terminal allows unlocking, and if yes, determining to allow the mobile terminal to unlock;
determining whether or not the current state of the mobile terminal allows unlocking comprises one of the following modes:determining whether or not service time of the mobile terminal satisfies a specified time; determining whether or not network traffic used by the mobile terminal satisfies a specified traffic value; and determining whether or not an amount of consumption of the mobile terminal satisfies a specified amount value, and
the unlocking identification information further comprises a locking mode which is one of the followings: a network locking mode, a card locking mode, a terminal locking mode and a cell locking mode; and according to the unlocking identification information, querying the cryptographic key list database pre-stored in the operator device to obtain the unlocking cryptographic key comprises:the operator device, according to the identification information of the mobile terminal and the locking mode, querying the cryptographic key list database pre-stored in the operator device to obtain the unlocking cryptographic key.

2. The method according to claim 1, **characterized in that** the operator device receives the unlocking request from the mobile terminal through one of the following modes:
a mode of a short message, a mode of Unstructured Supplementary Service Data, USSD, or a mode of Wireless Application Protocol, WAP.

3. The method according to claim 1, **characterized in that** when determining not to allow the mobile terminal to unlock according to the unlocking identification information, the operator device sends an unlocking authorization failure message to the mobile terminal, wherein the unlocking authorization failure message carries a reason of the unlocking failure.

4. The method according to claim 1, **characterized in that** after the operator device sends the unlocking cryptographic key to the mobile terminal, the method further comprises:
after determining that the mobile terminal is unlocked, the operator device monitoring a use state of the mobile terminal, and locking the mobile terminal over again after the use state satisfies a set locking condition.

5. An operator device, **characterized by** comprising:
a receiving module (52), configured to receive an unlocking request from a mobile terminal, wherein the unlocking request carries unlocking identification information;
an indexing module (54), configured to determine to allow the mobile terminal to unlock according to the unlocking identification information, and according to the unlocking identification information, query a cryptographic key list database pre-stored in the operator device to obtain an unlocking cryptographic key; and
a sending module (56), configured to send the unlocking cryptographic key to the mobile terminal to ensure that the mobile terminal carries out the unlocking according to the unlocking cryptographic key;
the unlocking identification information comprises: a network control password of the mobile terminal and identification information of the mobile terminal: and the operator device determining to allow the mobile terminal to unlock according to the unlocking identification information comprises: the operator device detecting whether the network control password of the mobile terminal and the identification information of the mobile terminal are legal, if both of the network control password of the mobile terminal and the identification information of the mobile terminal are legal, determining whether or not a current state of the mobile terminal allows unlocking, and if yes, determining to allow the mobile terminal to unlock:
determining whether or not the current state of the mobile terminal allows unlocking comprises one of the following modes: determining whether or not service time of the mobile terminal satisfies a specified time; determining whether or not network traffic used by the mobile terminal satisfies a specified traffic value; and determining whether or not an amount of consumption of the mobile terminal satisfies a specified amount value; and
the unlocking identification information further comprises a locking mode which is one of the followings: a network locking mode, a card locking mode, a terminal locking mode anda cell locking mode, and according to the unlocking identification information,querying the cryptographic key list database pre-stored in the operator device to obtain the unlocking cryptographic key comprises: the operator device, according to the identification information of the mobile terminal and the locking mode, querying the cryptographic key list database pre-stored in the operator device to obtain the unlocking cryptographic key.

6. A system for unlocking a mobile terminal by an operator, comprising a mobile terminal (62) and an operator device (64); **characterized in that** the mobile terminal (62) comprises:
a request sending module (622), configured to send an unlocking request to the operator device, wherein the unlocking request carries unlocking identification information;
a cryptographic key receiving module (624), configured to receive an unlocking cryptographic key returned by the operator device; and
an unlocking processing module (626), configured to carry out unlocking according to the unlocking cryptographic key; and
the operator device (64) comprises:
a request receiving module (642), configured to receive the unlocking request from the mobile terminal;
an indexing module (644), configured to determine to allow the mobile terminal to unlock according to the unlocking identification information, and according to the unlocking identification information, query a cryptographic key list database pre-stored in the operator device to obtain the unlocking cryptographic key; and
a cryptographic key sending module (646), configured to send the unlocking cryptographic key to the mobile terminal
the unlocking identification information comprises: a network control password of the mobile terminal and identification information of the mobile terminal, and the operator device determining to allow the mobile terminal to unlock according to the unlocking identification information comprises: the operator device detecting whether the network control password of the mobile terminal and the identification information of the mobile terminal are legal, if both of the network control password of the mobile terminal and the identification information of the mobile terminal are legal, determining whether or not a current state of the mobile terminal allows unlocking, and if yes, determining to allow the mobile terminal to unlock:
determining whether or not the current state of the mobile terminal allows unlocking comprises one of the following modes: determining whether or not service time of the mobile terminal satisfies a specified time; determining whether or not network traffic used by the mobile terminal satisfies a specified traffic value; and determining whether or not an amount of consumption of the mobile terminal satisfies a specified amount value; and
the unlocking identification information further comprises a locking mode which is one of the followings: a network locking mode, a card locking mode, a terminal locking mode and a cell locking mode; and according to the unlocking identification information, querying the cryptographic key list database pre-stored in the operator device to obtain the unlocking cryptographic key comprises: the operator device, according to the identification information of the mobile terminal and the locking mode, querying the cryptographic key list database pre-stored in the operator device to obtain the unlocking cryptographic key.

7. The system according to claim 6, **characterized in that** the operator device (64) communicates with the mobile terminal (62) through one of the following modes: a mode of a short message, a mode of Unstructured Supplementary Service Data, USSD, or a mode of Wireless Application Protocol, WAP.

## Patentansprüche

1. Verfahren zum Entsperren eines mobilen Endgeräts durch einen Betreiber, **dadurch gekennzeichnet, dass** es umfasst:
eine Betreibervorrichtung, die eine Anfrage zum Entsperren von einem mobilen Endgerät empfängt, wobei die Anfrage zum Entsperren Identifikationsinformationen zum Entsperren enthält;
wobei die Betreibervorrichtung gemäß den Identifikationsinformationen zum Entsperren ermittelt, ob dem mobilen Endgerät das Entsperren erlaubt wird, und gemäß den Identifikationsinformationen zum Entsperren eine in der Betreibervorrichtung vorgespeicherte Datenbank mit einer Liste von kryptografischen Schlüsseln abfragt, um einen kryptografischen Schlüssel zum Entsperren zu erhalten, und
wobei die Betreibervorrichtung dem mobilen Endgerät den kryptografischen Schlüsseln zum Entsperren übermittelt, um sicherzustellen, dass das mobile Endgerät die Entsperrung gemäß dem kryptografischen Schlüssel zum Entsperren durchführt;
wobei die Identifikationsinformationen zum Entsperren umfassen: ein Netzwerkkontrollpasswort für das mobile Endgerät und Identifikationsinformationen des mobilen Endgeräts, wobei die Betreibervorrichtung, die ermittelt, ob dem mobilen Endgerät das Entsperren gemäß den Identifikationsinformationen zum Entsperren erlaubt wird, umfasst: Erfassen durch die Betreibervorrichtung, ob das Netzwerkkontrollpasswort des mobilen Endgeräts und die Identifikationsinformationen des mobilen Endgeräts legal sind, ob sowohl das Netzwerkkontrollpasswort des mobilen Endgeräts als auch die Identifikationsinformationen des mobilen Endgeräts legal sind, wobei ermittelt wird, ob ein aktueller Status des mobilen Endgeräts das Entsperren erlaubt oder nicht und, sollte dieses erlaubt sein, dem mobilen Endgerät das Entsperren erlaubt wird;
wobei die Ermittlung, ob der aktuelle Status des mobilen Endgeräts das Entsperren erlaubt oder nicht, einen der folgenden Modi umfasst: Ermitteln, ob die Betriebszeit des mobilen Endgeräts einen bestimmten Zeitraum erfüllt oder nicht, Ermitteln, ob der vom mobilen Endgerät genutzte Netzwerkverkehr einen bestimmten Verkehrswert erfüllt oder nicht, und Ermitteln, ob eine Verbrauchsmenge des mobilen Endgeräts einen bestimmten Wert erfüllt oder nicht, und wobei die Identifikationsinformationen zum Entsperren zudem einen Entsperrmodus umfassen, der einer der folgenden Modi ist: ein Netzwerkentsperrmodus, ein Kartenentsperrmodus, ein Endgerätentsperrmodus und ein Mobilgerätentsperrmodus; und wobei das Abfragen der in der Betreibervorrichtung vorgespeicherten Datenbank mit der Liste der kryptografischen Schlüssel gemäß den Identifikationsinformationen zum Entsperren umfasst: das Abfragen gemäß den Identifikationsinformationen des mobilen Endgeräts und des Entsperrmodus der in der Betreibervorrichtung vorgespeicherten Datenbank mit einer Liste mit kryptografischen Schlüsseln durch die Betreibervorrichtung, um den kryptografischen Schlüssel zum Entsperren zu erhalten.

2. Verfahren nach Anspruch 1, **dadurch gekennzeichnet, dass** die Betreibervorrichtung die Anfrage zum Entsperren vom mobilen Endgerät durch einen der folgenden Modi empfängt:
einen Modus in Form einer Kurznachricht, einen Modus in Form von USSD, Unstructured Supplementary Service Data, oder einen Modus in Form eines WAP, Wireless Application Protocol.

3. Verfahren nach Anspruch 1, **dadurch gekennzeichnet, dass** die Betreibervorrichtung, wenn sie bestimmt, dass dem mobilen Endgerät das Entsperren gemäß den Identifikationsinformationen zum Entsperren nicht erlaubt wird, dem mobilen Endgerät eine Fehlermeldung bezüglich der Genehmigung zur Entsperrung übermittelt, wobei die Fehlermeldung bezüglich der Genehmigung zur Entsperrung einen Grund für den Entsperrungsfehler enthält.

4. Verfahren nach Anspruch 1, **dadurch gekennzeichnet, dass** das Verfahren, nachdem die Betreibervorrichtung dem mobilen Endgerät den kryptografischen Schlüssel zum Entsperren übermittelt hat, zudem Folgendes umfasst:
nachdem ermittelt wurde, dass das mobile Endgerät entsperrt wurde, überwacht die Betreibervorrichtung einen Nutzungszustand des mobilen Endgeräts und sperrt das mobile Endgerät erneut, nachdem der Nutzungszustand eine vorgegebene Sperrbedingung erfüllt.

5. Betreibervorrichtung, **dadurch gekennzeichnet, dass** sie umfasst:
ein Empfängermodul (52), das ausgelegt ist, um eine Anfrage zum Entsperren von einem mobilen Endgerät zu empfangen, wobei die Anfrage zum Entsperren Identifikationsinformationen zum Entsperren enthält;
ein Indexierungsmodul (54), das ausgelegt ist, um gemäß den Identifikationsinformationen zum Entsperren zu ermitteln, ob dem mobilen Endgerät das Entsperren erlaubt wird, und um gemäß den Identifikationsinformationen zum Entsperren eine in der Betreibervorrichtung vorgespeicherte Datenbank mit einer Liste von kryptografischen Schlüsseln abzufragen, um einen kryptografischen Schlüssel zum Entsperren zu erhalten, und
ein Sendemodul (56), das ausgelegt ist, um dem mobilen Endgerät den kryptografischen Schlüssel zum Entsperren zu übermitteln, um sicherzustellen, dass das mobile Endgerät die Entsperrung gemäß dem kryptografischen Schlüssel zum Entsperren durchführt;
wobei die Identifikationsinformationen zum Entsperren umfassen: ein Netzwerkkontrollpasswort für das mobile Endgerät und Identifikationsinformationen des mobilen Endgeräts, wobei die Betreibervorrichtung, die ermittelt, ob dem mobilen Endgerät das Entsperren gemäß den Identifikationsinformationen zum Entsperren erlaubt wird, umfasst: Erfassen durch die Betreibervorrichtung, ob das Netzwerkkontrollpasswort des mobilen Endgeräts und die Identifikationsinformationen des mobilen Endgeräts legal sind, ob sowohl das Netzwerkkontrollpasswort des mobilen Endgeräts als auch die Identifikationsinformationen des mobilen Endgeräts legal sind, wobei ermittelt wird, ob ein aktueller Status des mobilen Endgeräts das Entsperren erlaubt oder nicht und, sollte dieses erlaubt sein, dem mobilen Endgerät das Entsperren erlaubt wird;
wobei die Ermittlung, ob der aktuelle Status des mobilen Endgeräts das Entsperren erlaubt oder nicht, einen der folgenden Modi umfasst: Ermitteln, ob die Betriebszeit des mobilen Endgeräts einen bestimmten Zeitraum erfüllt oder nicht, Ermitteln, ob der vom mobilen Endgerät genutzte Netzwerkverkehr einen bestimmten Verkehrswert erfüllt oder nicht, und Ermitteln, ob eine Verbrauchsmenge des mobilen Endgeräts einen bestimmten Wert erfüllt oder nicht, und wobei die Identifikationsinformationen zum Entsperren zudem einen Entsperrmodus umfassen, der einer der folgenden Modi ist: ein Netzwerkentsperrmodus, ein Kartenentsperrmodus, ein Endgerätentsperrmodus und ein Mobilgerätentsperrmodus; und wobei das Abfragen der in der Betreibervorrichtung vorgespeicherten Datenbank mit der Liste der kryptografischen Schlüssel gemäß den Identifikationsinformationen zum Entsperren umfasst: das Abfragen gemäß den Identifikationsinformationen des mobilen Endgeräts und des Entsperrmodus der in der Betreibervorrichtung vorgespeicherten Datenbank mit einer Liste mit kryptografischen Schlüsseln durch die Betreibervorrichtung, um den kryptografischen Schlüssel zum Entsperren zu erhalten.

6. System zum Entsperren eines mobilen Endgeräts durch einen Betreiber, umfassend ein mobiles Endgerät (62) und eine Betreibervorrichtung (64), **dadurch gekennzeichnet, dass** das mobile Endgerät (62) umfasst:
ein Anfragesendemodul (622), das ausgelegt ist, um der Betreibervorrichtung eine Anfrage zum Entsperren zu übermitteln, wobei die Anfrage zum Entsperren Identifikationsinformationen zum Entsperren enthält;
ein Modul zum Empfangen eines kryptografischen Schlüssels (624), das ausgelegt ist, um einen von der Betreibervorrichtung übermittelten kryptografischen Schlüssel zum Entsperren zu empfangen, und
ein Verarbeitungsmodul zum Entsperren (626), das ausgelegt ist, um das Entsperren gemäß dem kryptografischen Schlüssel zum Entsperren durchzuführen, und
wobei die Betreibervorrichtung (64) umfasst:
ein Anfrageempfangsmodul (642), das ausgelegt ist, um die Anfrage zum Entsperren vom mobilen Endgerät zu empfangen;
ein Indexierungsmodul (644), das ausgelegt ist, um gemäß den Identifikationsinformationen zum Entsperren zu ermitteln, ob dem mobilen Endgerät das Entsperren erlaubt wird, und um gemäß den Identifikationsinformationen zum Entsperren eine in der Betreibervorrichtung vorgespeicherte Datenbank mit einer Liste von kryptografischen Schlüsseln abzufragen, um einen kryptografischen Schlüssel zum Entsperren zu erhalten, und
ein Modul zum Senden eines kryptografischen Schlüssels (646), das ausgelegt ist, um dem mobilen Endgerät den kryptografischen Schlüssel zum Entsperren zu übermitteln;
wobei die Identifikationsinformationen zum Entsperren umfassen: ein Netzwerkkontrollpasswort für das mobile Endgerät und Identifikationsinformationen des mobilen Endgeräts, wobei die Betreibervorrichtung, die ermittelt, ob dem mobilen Endgerät das Entsperren gemäß den Identifikationsinformationen zum Entsperren erlaubt wird, umfasst: Erfassen durch die Betreibervorrichtung, ob das Netzwerkkontrollpasswort des mobilen Endgeräts und die Identifikationsinformationen des mobilen Endgeräts legal sind, ob sowohl das Netzwerkkontrollpasswort des mobilen Endgeräts als auch die Identifikationsinformationen des mobilen Endgeräts legal sind, wobei ermittelt wird, ob ein aktueller Status des mobilen Endgeräts das Entsperren erlaubt oder nicht und, sollte dieses erlaubt sein, dem mobilen Endgerät das Entsperren erlaubt wird;
wobei die Ermittlung, ob der aktuelle Status des mobilen Endgeräts das Entsperren erlaubt oder nicht, einen der folgenden Modi umfasst: Ermitteln, ob die Betriebszeit des mobilen Endgeräts einen bestimmten Zeitraum erfüllt oder nicht, Ermitteln, ob der vom mobilen Endgerät genutzte Netzwerkverkehr einen bestimmten Verkehrswert erfüllt oder nicht, und Ermitteln, ob eine Verbrauchsmenge des mobilen Endgeräts einen bestimmten Wert erfüllt oder nicht, und wobei die Identifikationsinformationen zum Entsperren zudem einen Entsperrmodus umfassen, der einer der folgenden Modi ist: ein Netzwerkentsperrmodus, ein Kartenentsperrmodus, ein Endgerätentsperrmodus und ein Mobilgerätentsperrmodus; und wobei das Abfragen der in der Betreibervorrichtung vorgespeicherten Datenbank mit der Liste der kryptografischen Schlüssel gemäß den Identifikationsinformationen zum Entsperren umfasst: das Abfragen gemäß den Identifikationsinformationen des mobilen Endgeräts und des Entsperrmodus der in der Betreibervorrichtung vorgespeicherten Datenbank mit einer Liste mit kryptografischen Schlüsseln durch die Betreibervorrichtung, um den kryptografischen Schlüssel zum Entsperren zu erhalten.

7. System nach Anspruch 6, **dadurch gekennzeichnet, dass** die Betreibervorrichtung (64) mit dem mobilen Endgerät (62) über einen der folgenden Modi kommuniziert: ein Modus in Form einer Kurznachricht, ein Modus in Form von USSD, Unstructured Supplementary Service Data, oder ein Modus in Form eines WAP, Wireless Application Protocol).

## Revendications

1. Procédé pour déverrouiller un terminal mobile par un opérateur, **caractérisé en ce qu'**il comprend :
un dispositif de commande recevant une demande de déverrouillage du terminal mobile, dans lequel la demande de déverrouillage comporte des informations d'identification de déverrouillage ;
le dispositif de commande déterminant l'autorisation du déverrouillage du terminal mobile selon les informations d'identification de déverrouillage, et
interrogeant, selon les informations d'identification de déverrouillage, une base de données de listes de clés de chiffrement pré-stockée dans le dispositif de commande afin d'obtenir une clé de chiffrement de déverrouillage ; et
le dispositif de commande envoyant la clé de chiffrement de déverrouillage au terminal mobile pour garantir que le terminal mobile effectue le déverrouillage selon la clé de chiffrement de déverrouillage ;
les informations d'identification de déverrouillage comprennent : un mot de passe de contrôle de réseau du terminal mobile et les informations d'identification du terminal mobile ; et le dispositif de commande déterminant l'autorisation du déverrouillage du terminal mobile selon les informations d'identification de déverrouillage comprend : le dispositif de commande détectant si le mot de passe de contrôle de réseau du terminal mobile et les informations d'identification du terminal mobile sont légaux, si le mot de passe de contrôle de réseau du terminal mobile et les informations d'identification du terminal mobile sont légaux, déterminant si un état actuel du terminal mobile autorise ou non le déverrouillage, et si oui, déterminant l'autorisation du déverrouillage du terminal mobile ;
la détermination du fait que l'état actuel du terminal mobile autorise ou non le déverrouillage comprend l'une des modalités suivantes : la détermination du fait que la durée de service du terminal mobile satisfait ou non une durée précise ; la détermination du fait que le trafic du réseau utilisé par le terminal mobile satisfait ou non une valeur de trafic précise ; et la détermination du fait que la consommation du terminal mobile satisfait ou non une valeur précise ; et
les informations d'identification de déverrouillage comprennent de plus l'un des modes de déverrouillage suivants : un mode de verrouillage de réseau, un mode de verrouillage de carte, un mode de verrouillage de terminal et un mode de verrouillage de cellule ; et selon les informations d'identification de déverrouillage, l'interrogation de la base de données de listes de clés de chiffrement pré-stockée dans le dispositif de commande afin d'obtenir la clé de chiffrement de déverrouillage comprend : le dispositif de commande, selon les informations d'identification du terminal mobile et le mode de verrouillage, interrogeant la base de données de listes de clés de chiffrement pré-stockée dans le dispositif de commande afin d'obtenir la clé de chiffrement de déverrouillage.

2. Procédé selon la revendication 1, **caractérisé en ce que** le dispositif de commande reçoit la demande de déverrouillage du terminal mobile par l'intermédiaire de l'une des modalités suivantes :
un mode basé sur un message court, un mode basé sur un service supplémentaire pour données non structurées, USSD, ou un mode basé sur un protocole d'application sans fil, WAP.

3. Procédé selon la revendication 1, **caractérisé en ce que** lorsqu'il détermine de ne pas déverrouiller le terminal mobile selon les informations d'identification de déverrouillage, le dispositif de commande envoie un message mentionnant l'échec de l'autorisation de déverrouillage au terminal mobile, dans lequel le message mentionnant l'échec de l'autorisation de déverrouillage comporte le motif de l'échec du déverrouillage.

4. Procédé selon la revendication 1, **caractérisé en ce qu'**après l'envoi par le dispositif de commande de la clé de chiffrement de déverrouillage au terminal mobile, le procédé comprend de plus :
après avoir déterminé que le terminal mobile est déverrouillé, le dispositif de commande surveillant l'état d'utilisation du terminal mobile et verrouillant à nouveau le terminal mobile après l'état d'utilisation satisfait une condition de verrouillage établie.

5. Dispositif de commande **caractérisé en ce qu'**il comprend :
un module de réception (52), configuré pour recevoir une demande de déverrouillage d'un terminal mobile, dans lequel la demande de déverrouillage comporte des informations d'identification de déverrouillage ;
un module d'indexation (54), configuré pour déterminer l'autorisation du déverrouillage du terminal mobile selon les informations d'identification de déverrouillage, et selon les informations d'identification de déverrouillage, interroger une base de données de listes de clés de chiffrement pré-stockée dans le dispositif de commande afin d'obtenir une clé de chiffrement de déverrouillage ; et
un module d'envoi (56), configuré pour envoyer la clé de chiffrement de déverrouillage au terminal mobile pour garantir que le terminal mobile effectue le déverrouillage selon la clé de chiffrement de déverrouillage ;
les informations d'identification de déverrouillage comprennent : un mot de passe de contrôle de réseau du terminal mobile et les informations d'identification du terminal mobile ; et le dispositif de commande déterminant l'autorisation du déverrouillage du terminal mobile selon les informations d'identification de déverrouillage comprend : le dispositif de commande détectant si le mot de passe de contrôle de réseau du terminal mobile et les informations d'identification du terminal mobile sont légaux, si le mot de passe de contrôle de réseau du terminal mobile et les informations d'identification du terminal mobile sont légaux, déterminant si l'état actuel du terminal mobile autorise ou non le déverrouillage, et si oui,
déterminant l'autorisation du déverrouillage du terminal mobile ;
la détermination du fait que l'état actuel du terminal mobile autorise ou non le déverrouillage comprend l'une des modalités suivantes : la détermination du fait que la durée de service du terminal mobile satisfait ou non une durée précise ; la détermination du fait que le trafic du réseau utilisé par le terminal mobile satisfait ou non une valeur de trafic précise ; et la détermination du fait que la consommation du terminal mobile satisfait ou non une valeur précise ; et
les informations d'identification de déverrouillage comprennent de plus l'une des modalités de déverrouillage suivantes : un mode de verrouillage de réseau, un mode de verrouillage de carte, un mode de verrouillage de terminal et un mode de verrouillage de cellule ; et selon les informations d'identification de déverrouillage, l'interrogation de la base de données de listes de clés de chiffrement pré-stockée dans le dispositif de commande afin d'obtenir la clé de chiffrement de déverrouillage comprend : le dispositif de commande, selon les informations d'identification du terminal mobile et le mode de verrouillage, interrogeant la base de données de listes de clés de chiffrement pré-stockée dans le dispositif de commande afin d'obtenir la clé de chiffrement de déverrouillage.

6. Système pour déverrouiller un terminal mobile par un opérateur, comprenant un terminal mobile (62) et un dispositif de commande (64) ; **caractérisé en ce que** le terminal mobile (62) comprend :
un module d'envoi de demande (622), configuré pour envoyer une demande de déverrouillage à un dispositif de commande, dans lequel la demande de déverrouillage comporte des informations d'identification de déverrouillage ;
un module de réception de clé de chiffrement (624), configuré pour recevoir une clé de chiffrement de déverrouillage renvoyée par le dispositif de commande ; et
un module de traitement du déverrouillage (626), configuré pour effectuer le déverrouillage selon la clé de chiffrement de déverrouillage ; et
le dispositif de commande (64) comprend :
un module de réception de demande (642), configuré pour recevoir la demande de déverrouillage du terminal mobile ;
un module d'indexation (644), configuré pour déterminer l'autorisation du déverrouillage du terminal mobile selon les informations d'identification de déverrouillage, et selon les informations d'identification de déverrouillage, interroger une base de données de listes de clés de chiffrement pré-stockée dans le dispositif de commande afin d'obtenir la clé de chiffrement de déverrouillage ; et
un module d'envoi de clé de chiffrement (646), configuré pour envoyer la clé de chiffrement de déverrouillage au terminal mobile ;
les informations d'identification de déverrouillage comprennent : un mot de passe de contrôle de réseau du terminal mobile et les informations d'identification du terminal mobile ; et le dispositif de commande déterminant l'autorisation du déverrouillage du terminal mobile selon les informations d'identification de déverrouillage comprend : le dispositif de commande détectant si le mot de passe de contrôle de réseau du terminal mobile et les informations d'identification du terminal mobile sont légaux, si le mot de passe de contrôle de réseau du terminal mobile et les informations d'identification du terminal mobile sont légaux, déterminant si un état actuel du terminal mobile autorise ou non le déverrouillage, et si oui,
déterminant l'autorisation du déverrouillage du terminal mobile ;
la détermination du fait que l'état actuel du terminal mobile autorise ou non le déverrouillage comprend l'une des modalités suivantes : la détermination du fait que la durée de service du terminal mobile satisfait ou non une durée précise ; la détermination du fait que le trafic du réseau utilisé par le terminal mobile satisfait ou non une valeur de trafic précise ; et la détermination du fait que la consommation du terminal mobile satisfait ou non une valeur précise ; et
les informations d'identification de déverrouillage comprennent de plus l'une des modalités de verrouillage suivantes : un mode de verrouillage de réseau, un mode de verrouillage de carte, un mode de verrouillage de terminal et un mode de verrouillage de cellule ; et
selon les informations d'identification de déverrouillage, l'interrogation de la base de données de listes de clés de chiffrement pré-stockée dans le dispositif de commande afin d'obtenir la clé de chiffrement de déverrouillage comprend : le dispositif de commande, selon les informations d'identification du terminal mobile et le mode de verrouillage, interrogeant la base de données de listes de clés de chiffrement pré-stockée dans le dispositif de commande afin d'obtenir la clé de chiffrement de déverrouillage.

7. Système selon la revendication 6, **caractérisé en ce que** le dispositif de commande (64) communique avec le terminal mobile (62) par l'intermédiaire de l'une des modalités suivantes : un mode basé sur un message court, un mode basé sur un service supplémentaire pour données non structurées, USSD, ou un mode basé sur un protocole d'application sans fil, WAP.
